# EUROPEAN PATENT APPLICATION

(11) **EP 2 420 136 A1**
(43) Date of publication of application: **22.02.2012**
(21) Application number: 11178011.0
(22) Date of filing: 18.08.2011
(51) Int. Cl.: A01K 61/00, A01K 63/00, A01M 29/32

(54) **Pond protection system**

(30) Priority: 19.08.2010 GB 1013890
(71) Applicant: Netfloat, Ltd., Towpath Shepperton Middlesex TW17 9LL (GB)
(72) Inventor: Payne, Barrie, Shepperton, Middlesex TW17 9LL (GB)
(74) Representative: Warrilow, David Thomas

(57) **Abstract**

There is provided a floating pond protection system (1) to protect a pond from predators such as cats and herons. The system comprises a plurality of barriers (2), a plurality of elongate joining pins (3) that are substantially perpendicular to the barriers, and a plurality of floats (4). The joining pins (3) snap-fit with holes on the barriers and also with the floats. Thus in use, the pins (3) can hold the barriers in a fixed position relative to each other and the floats (4) push the barriers away from the surface of the water.

## Description

The present invention relates to a pond protection system.

Fishponds are a popular feature in many gardens, both public and private. A universal problem with fishponds, however, is the threat of cats and birds attacking the fish.

Many solutions have been proposed to attempt to overcome this problem, including means to scare cats and birds, the provision of netting across the top of the pond, and chemical animal deterrents.

However, all of the solutions to date have certain drawbacks. For example, some are unsightly, others dangerous for harmless animals and small children, others a source of unwanted noise.

The present invention seeks to address these issues.

According to a first aspect of the present invention there is provided a pond protection system comprising:
i) a plurality of barrier pieces having a substantially planar net layer for covering part of a surface of a pond; and
ii) a plurality connecting members that are elongate and extend substantially perpendicularly from the plane of the net;
the system allowing for the barrier pieces to be connected together by a connecting member on a first barrier piece being placed through a hole in the net of a second barrier piece.

By providing a system whereby one barrier piece is connected to another by inserting one or more connecting members from one barrier piece through the holes of the net of a second piece the system becomes extremely versatile, able to adopt almost any shape and thereby cover almost any shape of pond. Further, the use of elongate members that are substantially perpendicular to the plane of the barrier piece the barrier pieces may be readily connected in positions relative to each other.

Preferably each of the barrier pieces comprises a plurality of connecting members. In some embodiments the connecting members may be formed integrally with the barrier piece.

In other embodiments the connecting members may be formed separately from the barrier piece.

In those embodiments each of the barrier pieces comprises a plurality of spaced apart joining holes each adapted to house a connecting member.

By forming the connecting members separately from the barrier pieces and by providing a plurality of joining holes the connection member may be positioned on the barrier piece at the most suitable place, thus reducing wasted material and making the system more aesthetically pleasing.

Preferably the system comprises at least one buoyancy means to hold the planar net layer in a position above the surface of the pond when the system is in use.

By providing at least one buoyancy means to urge the protective layer a upwards away from the water the pond is greatly benefited as plants have more freedom of movement, less algae grows and fish are able to feed from the surface of the pond without the interference of the barrier piece.

Preferably the connecting members are adapted to attach to at least one buoyancy means.

Preferably the joining holes and connecting members attach to each other by a snap-fit connection.

Preferably the connecting members and buoyancy means attach to each other by a snap-fit connection.

Use of snap-fit connections allows the system to be easily installed.

Preferably the connecting members are in substantially fixed positions on the barrier pieces.

According to another aspect of the present invention there is provided a floating pond protection system comprising at least one barrier piece having a substantially planar protective layer for covering part of a surface of a pond, and buoyancy means adapted to hold the protective layer in a position where it is held above the surface of the pond when in the system is use.

Preferably the system comprises connecting members to connect the barrier pieces to each other.

Preferably the connecting members are adapted to attach to the buoyancy means.

Preferably the protective layer comprises a mesh.

Preferably the connecting members and buoyancy means attach to each other by a snap-fit connection.

Preferably the barrier pieces each comprise a plurality of joining holes to which the connecting members may attach.

Preferably the joining holes and connecting members connect to each other by a snap-fit connection.

In order that the invention may be more fully understood a specific embodiment will now be described with reference to the accompanying drawings, of which:

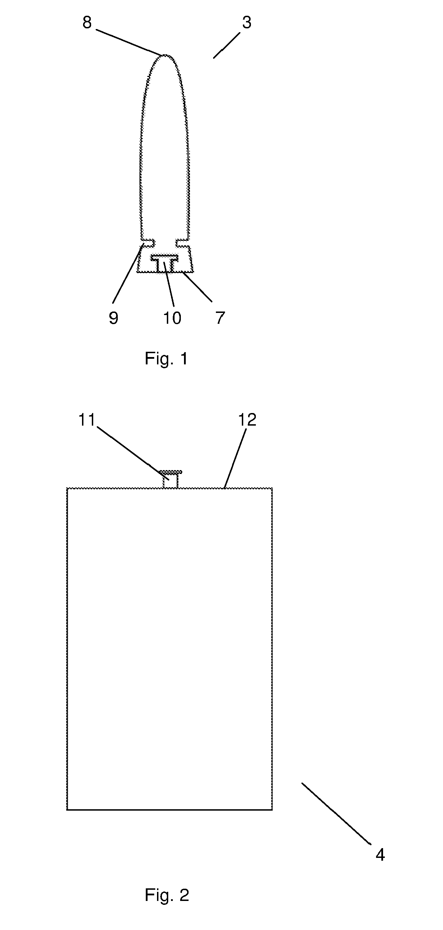

Figure 1 is cross-section of a pin made in accordance with the present invention;
Figure 2 is a cross-section of a float to be used with the pin of Figure 1;

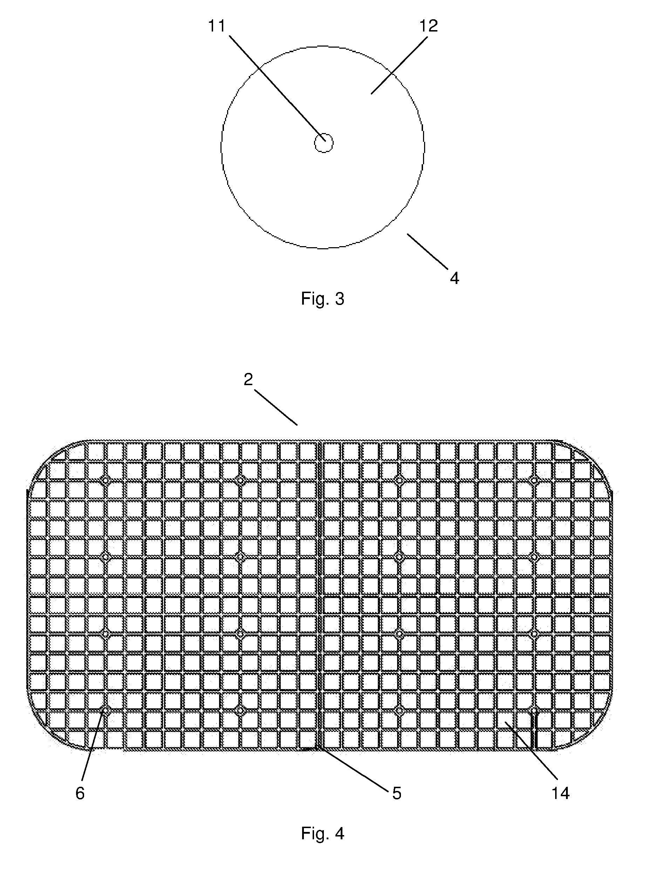

Figure 3 is a plan view of the float of figure 2;
Figure 4 is a plan view of a barrier piece to be used with the pin and float of Figures 1 and 2;
Figure 5 is a perspective view of the pin of Figure 1 positioned in a joining hole on the barrier piece of Figure 4.
Figure 6 is a cross-section of the pin of Figure 1 joining together two of the barrier pieces of Figure 4;
Figure 7 is a cross-section of the pin of Figure 1 joining together two of the barrier pieces of Figure 4 with the float of Figure 2 attached to the pin; and Figure 8 is a plan view of the system of the present invention in a pond.

Referring to the drawings, there is provided a pond protection system 1 comprising a plurality of barrier pieces 2, a plurality of pins 3 and a plurality of floats 4.

Barrier pieces 2 are substantially rectangular in shape, with rounded corners, but may of course be any appropriate shape. Barrier pieces 2 are substantially planar, and comprise a protective net layer in the form of a grid 14. However, it will be appreciated that the barrier piece need not comprise a regular grid, but could have a mesh of any pattern, or any other suitable conformation. Thus when the term 'net' in the claims it is used it is intended to cover any suitable pattern or configuration.

Barrier pieces 2 are formed in one piece from a plastics material. The plastics material that the barrier piece is made from is less dense than water and thus floats naturally. However it will be apparent that the barrier pieces could be formed in several parts and made from any suitable material.

Barrier pieces 2 comprise a transverse section 5 adapted to be cut so as to divide the barrier piece into two equal parts. The provision of section 5 allows the barrier pieces to be cut into two parts for when it is necessary to use a smaller barrier piece owing to the shape of the pond to be protected.

Barrier pieces 2 also comprise a plurality of joining holes 6. In the present embodiment each barrier piece comprises eighteen joining holes, spaced out around the protective layer. It will be recognized that any number of joining holes may be provided depending upon the size and purpose of the barrier piece.

In the present embodiment that barrier pieces or 'net mats' are around 700mm in length by around 370mm wide. Each joining hole is approximately 6.5mm in diameter and the size of each hole in the grid is approximately 20mm by 20mm.

Pins 3 are generally elongate in shape, having a proximal end 7 and a distal end 8. however, it will be apparent that various shapes of connection means could be used, and the connection means need not be elongate.

Pins 3 comprise a rounded tip at distal end 8 so as to aid insertion into joining holes 6 of barrier pieces 2.

Pins 3 comprise a circumferential recess 9 adjacent to proximal end 7. Between recess 9 and proximal end 7 the pin comprises an outward taper such that the circumference of the pin at proximal end 7 is greater than the circumference of pin 3 at the edge of circumferential recess 9.

Circumferential recess 9 is adapted so as to provide the female part of a snap-fit connection with joining holes 6 on barrier pieces 2. The circumference of one or more joining holes 6 provides the male part or parts of the snap-fit connection. Circumferential recess 9 is of a width so as to be able to retain the circumferential parts of a single barrier pieces, but in some embodiments it may be preferable for the circumferential recess to be able to snap-fit with more than one barrier piece.

In proximal end 7 of pin 3 there is provided a terminal recess 10 providing the female part of a snap-fit connection.

In the present embodiment each pin is approximately 50mm in length and the diameter at the proximal end is around 19mm.

Turning to float 4, there is provided a cylindrical hollow plastic chamber, which is sealed and contains air. On its uppermost face 12 float 4 comprises a protrusion 11 shaped so as to provide the male part of a snap-fit connection with terminal recess 10 in pin 3.

It is evident that float 4 could be made in many shapes and sizes and out of many materials. In some embodiments it may be preferable to use a solid substance such as foam. Furthermore, it will be apparent that in some embodiments it may be desirable to provide floats that connect directly to barrier pieces 2 without using a pin 3 as an intermediary part. In such instances float 4 could be provided with means to connect to a joining hole 6.

In the present embodiment float 4 is around 70 mm in height (excluding protrusion 11) and around 44mm in diameter.

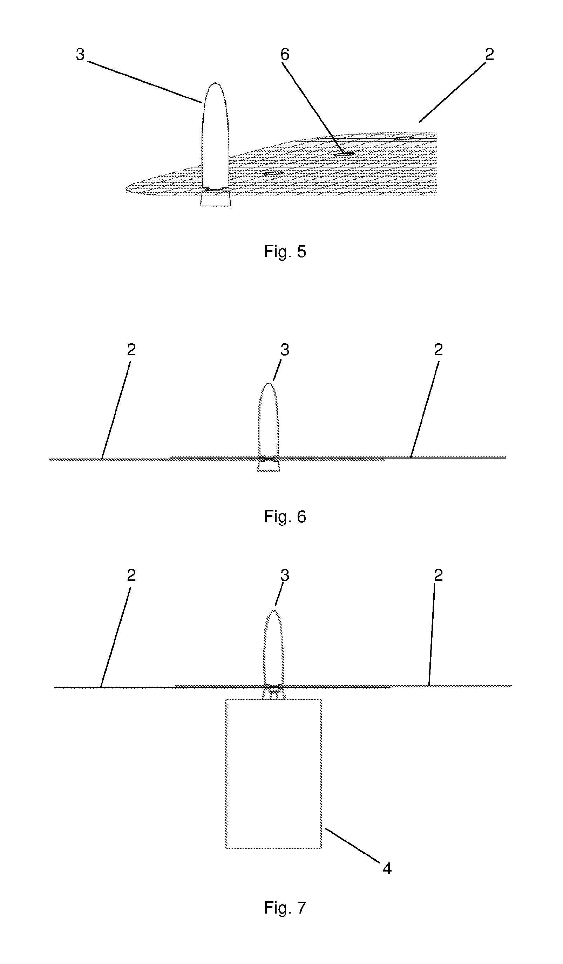

Turning to the system in use, and referring to Figures 5 to 8, in order to use the system to protect a pond from predators barrier pieces 2 are joined together using pins 3. In order to join the barrier pieces together, one or more pins are attached to the joining hole or holes of a first barrier piece. This is done by pushing a pin 3 through a joining hole until the snap-fit connection between recess 9 and the circumference of the joining hole is made.

It will be seen from the Figures that when in place in the barrier piece the pin is substantially orthogonal to the plane of the barrier piece and its net.

A second barrier piece is then laid down upon the first barrier piece with the joining pin or pins already installed being guided through squares of grid 14.

This process is then repeated by inserting fresh pins into joining holes on the second barrier piece and laying a third barrier piece in position over these fresh pins.

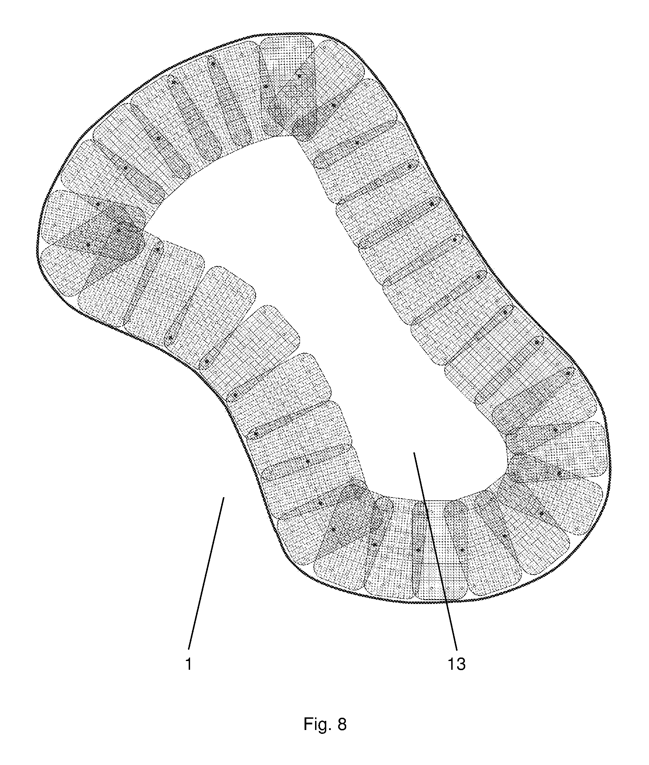

This method of connection of the barrier pieces, i.e. the provision of pins over which holes of grid 14 may be laid means that the barrier pieces can be connected together in a very diverse number of ways. Indeed, a protective surface can be formed in almost any shape, as illustrated in Figure 8, wherein the system is being used to protect the circumferential surface area of pond 13.

The height of pin 3 is sufficient to maintain the connection between the first and second barrier pieces even if the water becomes relatively turbulent. In order to disengage the second barrier piece from the first barrier piece the second piece must be lifted substantially vertically such that its net passes over the top of the pin.

If desired, float 4 may be attached to the proximal end of the pin by pushing protrusion 11 into recess 10 so as to form a snap-fit connection between float 4 and pin 3.

When the system is in use in a pond, by attaching floats to the pins the barrier elements and their protective layers of the barrier pieces are urged away from the surface of the pond. When sufficient floats are in place the protective layer is spaced from the surface of the pond.

This is particularly beneficial to the pond as it allows freedom of movement for plants in the pond, allows fish to feed from the surface of the pond without the hindrance of a net and reduces growth of algae in the pond compared to if the protective layers of the barrier pieces are immersed in the water.

Thus it can be seen that the pins have a dual purpose. Not only do they allow the barrier pieces to be attached to one another and held in a substantially fixed position relative to one another, but they allow a connection to the floats.

Many variations are possible without departing from the scope of the invention as set out in the appended claims.

## Claims

1. A pond protection system comprising
i) a plurality of barrier pieces having a substantially planar net layer for covering part of a surface of a pond; and
ii) a plurality connecting members that are elongate and extend substantially perpendicularly from the plane of the net;
the system allowing for the barrier pieces to be connected together by a connecting member on a first barrier piece being placed through a hole in the net of a second barrier piece.

2. The system of claim 1 wherein the barrier pieces each comprise a plurality of connecting members.

3. The system of claim 1 or 2 wherein the connecting members are formed integrally with the barrier piece.

4. The system of claim 1 or 2 wherein the connecting members are formed separately from the barrier piece.

5. The system of any of claims 1, 2 or 4 wherein each of the barrier pieces comprises a plurality of spaced apart joining holes each adapted to attach to a connecting member.

6. The system of any preceding claim comprising buoyancy means to hold the barrier pieces in a position above the surface of the pond when the system is in use.

7. The system of claim 6 wherein the connecting members are adapted to attach to at least one buoyancy means.

8. The system of any preceding claim wherein connecting members are in substantially fixed positions on the barrier pieces.

9. A floating pond protection system comprising at least one barrier piece having a substantially planar protective layer for covering part of a surface of a pond, and buoyancy means adapted to hold the protective layer in a position where it is held above the surface of the pond when in the system is use.

10. The system of claim 9 comprising connecting members to connect the barrier pieces to each other.

11. The system of claim 10 wherein the connecting members are adapted to attach to the buoyancy means.

12. The system of claims 10 or 11 wherein the barrier pieces each comprise a plurality of joining holes to which the connecting members may attach.

13. A connection means adapted for use with the system of any preceding claim.

14. A barrier piece adapted for use with the system of any of claims 1 to 13.

15. A buoyancy means adapted for use with the system of any of claims 1 to 13.
